# EUROPÄISCHE PATENTSCHRIFT

(11) **EP 3 364 786 B1**
(45) Veröffentlichungstag und Bekanntmachung des Hinweises auf die Patenterteilung: **30.03.2022**
(21) Anmeldenummer: 16784526.2
(22) Anmeldetag: 21.10.2016
(51) Int. Cl.: A24C 5/358

(54) **SCHRAGEN AUS LEITFÄHIGEM KUNSTSTOFF**
TRAY MADE OF CONDUCTIVE PLASTICS MATERIAL
BATEAU EN PLASTIQUE CONDUCTEUR

(30) Priorität: 23.10.2015 DE 202015105643 U
(43) Veröffentlichungstag der Anmeldung: 29.08.2018
(73) Patentinhaber: Hauni Maschinenbau GmbH, 21033 Hamburg (DE)
(72) Erfinder: WUTTKE, Tobias, 21031 Hamburg (DE); KRÖSSMANN, Jürgen, 21493 Schwarzenbek (DE); WILLIG, Jens, 23843 Bad Oldesloe (DE)
(74) Vertreter: Stork Bamberger Patentanwälte PartmbB
(86) Internationale Anmeldenummer: PCT/EP2016/075366
(87) Internationale Veröffentlichungsnummer: WO 2017/068118

(56) Entgegenhaltungen:
- EP-A1- 2 805 633
- DE-A1- 10 259 498
- DE-A1-102013 114 071
- US-A1- 2005 277 726
- US-A1- 2013 228 726

## Beschreibung

Die vorliegende Erfindung betrifft Schragen zur Aufnahme stabförmiger Produkte der Tabak verarbeitenden Industrie, umfassend einen durch eine Rückwand, zwei zumindest im Wesentlichen parallele und beabstandet zueinander angeordnete Seitenwände sowie eine Bodenwand gebildeten Schragenkörper unter Bildung eines nach vorn und nach oben offen ausgebildeten Aufnahmeraumes für die Produkte, wobei der Schragen als Schachtschragen ausgebildet sein kann. Wobei der Schragen einen entfernbaren Deckel und/oder eine entfernbare Vorderwand aufweisen kann. Ferner kann der Schragen Aufnahmen für eine als bewegbares Schwert ausgebildete Bodenwand aufweisen.

Die beschriebenen Schragen kommen insbesondere in der Tabak verarbeitenden Industrie bei der Verarbeitung stabförmiger Produkte zum Einsatz. Tabakstöcke, Zigaretten, Filterstäbe und insbesondere Filterstabsegmente oder dergleichen werden in Behältern, den so genannten Schragen, insbesondere zum Transport und zur Speicherung aufbewahrt. Dabei können die Behälter als Standardschragen mit einem einzigen Aufnahmeraum für alle Produkte oder als Schachtschragen ausgebildet sein, in denen die Produkte in mehreren voneinander getrennten Schächten liegen. Zur Weiterverarbeitung der gespeicherten Produkte werden diese an nachgeordnete Vorrichtungen, wie z.B. Packmaschinen, Filteransetzmaschinen oder Multisegmentstabherstellungsmaschinen abgegeben und/oder in einen vorhandenen Massenstrom eingeschleust.

Solche Schragen sind aus Metall oder aus Kunststoff wie beispielsweise Polystyrol (PS) oder Acrylnitril-Butadien-Styrol (ABS) hergestellt, da dieses Material stabil und gleichzeitig leicht sowie kostengünstig ist. Derartige Schragen sind zum Beispiel im deutschen Gebrauchsmuster 1 882 950 beschrieben.

Zum Füllen von Schragen werden Schragenfülleinrichtungen, sogenannten Schragenfüllern bspw. vom Typ HCF der Anmelderin genutzt, die jeweils einer Produktionsmaschine für Filterzigaretten, Filterstäben und Multisegmentartikel nachgeordnet sind. Die stabförmigen Produkte werden aus unterschiedlichen Gründen in Schragen, gelagert, bspw. zur Sicherstellung einer Aushärtezeit für Filterstäbe oder bei räumlicher Trennung der Produktionsmaschinen und der Weiterverarbeitungs- und/oder Packmaschinen oder zum Ausgleich von temporären Störungen der Produktionsmaschinen bzw. der Weiterverarbeitungs- und/oder Packmaschinen. Eine nachgeordnete Vorrichtung, in der Schragen zum Einsatz kommen, ist eine Schragenentleereinrichtung, mit Hilfe derer stabförmige Artikel wieder in den Produktionsprozess eingeführt werden.

Bekannte Schragenentleereinrichtungen weisen Übergabeeinrichtungen zum Handhaben bzw. zum Entleeren der Schragen auf, die als Schwenkmechanismus ausgebildet sind. Ein Entleerzyklus umfasst das Abnehmen der Vollschragen von der Zuführeinrichtung, das über Kopf Entleeren der Vollschragen in der Entleerstation und das Abgeben der Leerschragen an die Abtransporteinrichtung.

Solche Schragenentleereinrichtungen sind zum Beispiel in der DE 10 2008 027 636 A1 beschrieben. Bei den bekannten Schragenentleereinrichtungen tritt das Problem auf, dass bei bzw. nach dem Entleeren stabförmige Produkte in dem Schragen verbleiben, obwohl der Schragen in der Schragenentleereinrichtung vollständig hätte entladen werden sollen. An Boden und/oder Wand des Schragens bleiben stabförmige Produkte hängen, da sich die Wände der Schragen und/oder die Produkte während des Herstellungs- und/oder Transportprozesses elektrostatisch aufgeladen haben. Ein solches elektrostatisches Feld bildet sich aufgrund des Umstandes, dass die Schragen aus Kunststoff, einem dielektrischen Material hergestellt sind, durch Reibung. Reibung tritt auf der einen Seite auf, wenn die stabförmigen Produkte in den Schragen gefüllt werden, wobei sie gegen die Wände und den Boden des Schragens reiben. Dabei laden sich Schragenwände bzw. -boden und stabförmige Produkte mit unterschiedlichen Ladungen auf, was zur Bildung eines elektrostatischen Feldes führt, das verhindert, dass sich die Schragen in der Entleereinrichtung vollständig entleeren lassen, wie eigentlich gewünscht. Eine weitere Aufladung erfolgt weiterhin dadurch, dass die Schragen auf ihrem Transport mit anderen Gegenständen, insbesondere aus Kunststoff in Berührung kommen. So sind zum Beispiel die Transportbänder zum einen der Zuführeinrichtung, zum anderen der Abtransporteinrichtung üblicherweise aus Kunststoff hergestellt. Durch die Reibung zwischen Schragen und Transportband entsteht wiederum elektrische Ladung. Besonders relevant tritt eine solche Ladung bei der Übergabe des Schragens von Zuführeinrichtung zu der Entleereinrichtung und/oder bereits zuvor im Schragenfüller auf, insbesondere dann, wenn der Schragen mittels eines Stoppers zwecks Übergabe an die Entleereinrichtung oder einem Schragenfüller angehalten wird, während das Transportband der Zuführeinrichtung unter dem Schragen weiterläuft.

Bislang wird diesem Problem Rechnung getragen, in dem die Leerschragen von einer Person kontrolliert oder eine optische Überwachungseinrichtung, bspw. gemäß der DE 10 2005 024 126 A1 vorgesehen wird und ggf. verbliebene stabförmige Produkte manuell entfernt werden. Mit einem zunehmenden Grad an Automatisierung in der Produktion, fehlt es im gesamten Prozess jedoch zunehmend an Personen, die eine solche Kontrollfunktion und Entnahmetätigkeit ausüben könnten.

Es ist daher wünschenswert, sicherzustellen, dass keine stabförmigen Produkte nach dem Entleervorgang im Schragen verbleiben.

Hierzu schlägt die WO 2011/090395 A1 zwei Maßnahmen vor, zum einen das Einblasen ionisierter Druckluft in den Boden der Schragen zum Neutralisieren der Ladung, zum anderen das Verwenden einer Einlage oder eines Einsatzes aus einem leitenden Material im Inneren des Schragen.

Die DE 10 2013 208 407 A1 schlägt vor, dass an den Transportwegen der Entleerungsvorrichtung für die Schragen und in der Entleerungsposition der Schragen jeweils eine lonisierungseinrichtung zur Verminderung, insbesondere Beseitigung, von elektrostatischen Ladungen auf den Oberflächen der Schragen und der in den Schragen enthaltenden Produkten vorgesehen ist, derart, dass die Schragen und die Produkte mittels Ionisierungseinrichtungen mit einem Ionisierungsstrom beaufschlagt werden.

DE 102 59 498 A1 (BAYER AG [DE]) 1. Juli 2004 (2004-07-01) offenbart ein elektrostatisch dissipatives Material. DE 10 2013 114071 A1 (HAUNI MASCHINENBAU AG [DE]) 18. Juni 2015 (2015-06-18) beschreibt elektrisch leitende Additive in Form von ein elektrisch leitendes Additiv (Kohlenstoff) in Faserform oder ein elektrisch leitendes Additiv in Form eines intrinsisch leitfähiges Polymer.

Das Vorsehen einer Einrichtung zum Einblasen ionisierter Druckluft ist konstruktiv aufwendig, mit erhöhten Kosten verbunden und zudem letztlich nicht hinreichend sicher. Auch das Vorsehen von Metalleinlagen oder Metalleinsätzen ist aufwendig, da bei der Herstellung der Schragen ein zusätzlicher Arbeitsschritt des Einsetzens der Einlage erforderlich ist, was wiederum die Kosten erhöht. Auch besteht die Gefahr, dass sich Einlage oder Einsatz vom Schragen lösen, in die Maschinen geraten und zu Beschädigungen führen.

Es wurden auch Versuche unternommen, die Schragen aus Stahl- oder Aluminiumblech herzustellen. Es zeigten sich jedoch im laufenden Betrieb Probleme hinsichtlich einer Langzeitformstabilität, verbogene Seitenwände führten zu Störungen in den Füll- und Entleereinrichtungen. Derartige Schragen waren zudem teurer und schwerer als Standardkunststoffschragen.

Es wurden auch erste Versuche unternommen, die Schragen aus elektrisch leitfähigem Kunststoff herzustellen. Eine geeignete Gruppe elektrisch leitfähiger Kunststoffe sind Kunststoffe, die ein elektrisch leitendes Additiv enthalten. Hierzu wurden bereits anorganische Additive oder organische Additive vorgeschlagen. Geeignete anorganische Additive sind prinzipiell Leitfähigkeitsruß, Graphit, Edelstahl, Kupfer, Aluminium, Silber oder Eisenoxid. Es wurde weiterhin vorgeschlagen, Edelstahl in Form von Fasern, Kupfer oder Aluminium in Form von Teilchen sowie Silber, Leitfähigkeitsruß oder Graphit in Form von Pulver dem Kunststoff zuzusetzen.

Alternativ wurde bereits die Verwendung von Kohlenstofffasern vorgeschlagen. Solche sogenannten kohlenstofffaserverstärkten Kunststoffe (CFK = Carbon-faserverstärkter Kunststoff) weisen neben der gewünschten elektrischen Leitfähigkeit eine hohe Zugfestigkeit auf. Da elektrische Leitfähigkeit, Zugfestigkeit, Biegeelastizität und Steifigkeit durch die Kohlenstofffasern verliehen werden, sind diese Eigenschaften abhängig von der Faserrichtung. Diese aus dem Flugzeugbau und Fahrzeugbau bekannten Eigenschaften könnte man sich bei der Herstellung der Schragen zunutze machen.

In einer weiteren Alternative wurde vorgeschlagen, dass das elektrisch leitende Additiv ein organisches elektrostatisch dissipatives Additiv ist, insbesondere ausgewählt aus mindestens einer Substanz der Gruppe bestehend aus Polyanilinen, Polyurethanen, Polyethylendioxythiophenen und Polyacrylaten.

Schließlich wurde vorgeschlagen, dass der elektrisch leitfähige Kunststoff ein intrinsisch leitfähiges Polymer, insbesondere ein dotiertes intrinsisch leitfähiges Polymer ist. Unter den intrinsisch leitfähigen Polymeren sind insbesondere das cis-Polyactetylen (cis-PA), das trans-Polyacetylen (trans-PA), Poly(paraphenylen) (PPP), Polythiophen, Polypyrrol, Poly(para-phenylen-vinylen) (PPV) und Polyanilin (PANI) zu nennen.

Die in den vorstehend aufgezeigten vier alternativen Gruppen von elektrisch leitfähigen Kunststoffen mit oder ohne Additiv weisen jedoch für die vorliegende Aufgabe verschiedene Nachteile auf, so unterliegen, insbesondere die metallischen Additive einer mehr oder weniger starken Korrosion. Die anorganischen Additive Graphit, Leitfähigkeitsruß, Aluminium und Eisenoxid bringen ein dunkle bis schwarze Einfärbung der Behälter bzw. Schragen mit sich. Zudem sind diese Additive nicht abriebfest, was zu einer unerwünschten Verschmutzung von Fördereinrichtungen und zu einer unzulässigen Kontaminierung der Produkte führt. Kohlenstofffaserverstärkten Kunststoffe, wie sie aus dem Flugzeugbau und Fahrzeugbau bekannt sind, werden dort aufwendig mehrlagig in Form von Matten verarbeitet und/oder im Wickelfahren gebildet, eine spritzgusstechnische Herstellung eines Schragens scheidet somit aus. Organische elektrostatisch dissipative Additive und intrinsisch leitfähige Polymere mangelt es an einer hinreichenden Zug- und Biegefestigkeit. Weiterhin mangelt es einigen Stoffen an einer U.S. FDA-Zulassung und/oder der entsprechenden europäischen Verordnung (EU) 1935/2004.

Aufgabe der vorliegenden Erfindung ist es daher, einen elektrisch leitfähigen Kunststoffschragen zur Verfügung zu stellen, dessen vollständige Entleerung sichergestellt werden kann und der gleichzeitig einfach und kostengünstig herzustellen ist, wobei die Vorschriften der U.S. FDA und der entsprechenden europäischen Verordnung für Stoffe mit Lebensmittelkontakt vollumfänglich Berücksichtigung finden.

Diese Aufgabe wird erfindungsgemäß durch einen Schragen der eingangs genannten Art gelöst, der zumindest teilweise, vorzugsweise im Wesentlichen vollständig, aus elektrisch leitfähigem Kunststoff gebildet ist, wobei der leitfähige Kunststoff ein Stoffgemisch aus einem Grundstoff, nämlich einem Kunststoff, und mindestens zwei elektrisch leitenden Additiven ist.

Es hat sich überraschend herausgestellt, dass zwei verschiedene Additive die Anforderungen an einen Schragen mit elektrischer Ableitfähigkeit bei zugleich hinreichender Stabilität und Biegeelastizität erfüllen. Es ist kein Aufbringen einer zusätzlichen Schicht, einer Einlage oder dergleichen erforderlich. Der Schragen kann konstruktiv sehr einfach hergestellt werden. Ein elektrisch leitfähiger Kunststoff im Sinne der Erfindung ist dabei ein Kunststoff, der eine elektrische Leitfähigkeit von mindestens 10⁻¹⁰ S·cm⁻¹ aufweist.

Dies gelingt besonders gut, wenn der gesamte Schragen aus elektrisch leitfähigem Kunststoff gebildet ist. Vorteilhafterweise ist der Schragen dabei einstückig ausgebildet und im Spritzgussverfahren hergestellt. Auf diese Weise wird ein sehr stabiler Schragen erhalten, der gleichzeitig kostengünstig in der Herstellung ist, so können bereits vorhandene Formen zur Schragenherstellung weiter verwendet werden, da sich lediglich das Material ändert, während die Schragenform identisch bleibt.

In einem bevorzugten Stoffgemisch ist ein erstes elektrisch leitendes Additiv, ein anorganisches Additiv in Faserform, insbesondere ausgewählt aus mindestens einer Substanz der Gruppe, bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer.

Es hat sich überraschend herausgestellt, dass durch die Kombination zweier bestimmter Additive, nämlich durch Kombination eines anorganischen Additivs in Faserform mit einem intrinsisch leitfähigen Polymer oder einem intrinsisch dissipativen Polymer, die dem Grundstoff zugesetzt wird, ein Werkstoff erhalten wird, der bewirkt, dass bei daraus hergestellten Schragen beim Entleervorgang keine stabförmigen Artikel im Schragen zurückbleiben. Vielmehr weist der Werkstoff eine elektrostatische Ableitung auf, die ausreichend ist, die elektrostatische Anziehung zwischen Schragen und stabförmigen Artikeln derart zu verringern, dass sie nicht mehr ausreicht, um die stabförmigen Artikel im Schragen zurückzuhalten, indem nämlich auch eine elektrostatische Ableitung der in den stabförmigen Artikeln vorhandenen Ladung erfolgt. Wie im Rahmen der vorliegenden Erfindung gefunden wurde, ist es, da die stabförmigen Artikel die Schragenwände nicht großflächig, sondern nur punktuell berühren, wichtig, dass eine elektrostatische Ableitung großflächig erfolgt. Dabei sorgt das intrinsisch leitfähige bzw. ableitfähige Additiv in der Kombination mit den anorganischen Additiven in Faserform, die besonders gut elektrisch leitfähig sind, dafür, dass die Leitfähigkeit des Additivs in Faserform, die nur in unmittelbarer Umgebung der Faser ihre Wirkung entfaltet, auf den gesamten Werkstoff verteilt wird.

Der vorstehend für die erfindungsgemäßen Schragen beschriebene Werkstoff ist jedoch auch für andere Anwendungsbereiche, in denen eine elektrostatische Ableitung erforderlich ist, geeignet. Solche Anwendungsbereiche können weitere Maschinenteile in der tabakverarbeitenden Industrie, insbesondere bei Transporteinrichtungen oder Transportvorrichtungen wie z.B. Förderbänder oder Förderketten sein, aber auch gänzlich andere Anwendungsgebiete und Industrien sind denkbar. So stellt die vorliegende Erfindung des Weiteren ein elektrostatisch dissipatives Material zur Verfügung, das aus einem Grundstoff, nämlich einem Kunststoff, und mindestens zwei, insbesondere genau zwei, elektrisch leitenden Additiven besteht, wobei ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer ist.

In einer besonders geeigneten Ausführungsform ist der Grundstoff des leitfähigen Werkstoffes bzw. des elektrostatisch dissipativen Materials ein Polystyrol. Polystyrol hat sich als Werkstoff für Schragen in der tabakverarbeitenden Industrie besonders bewährt, da er leicht und formstabil ist und sich darüber hinaus gut im Spritzgussverfahren verarbeiten lässt.

Für das erste elektrisch leitende Additiv kommt als anorganisches Additiv in Faserform mindestens eine Substanz der Gruppe bestehend aus Kohlenstoff, Edelstahl, und Nichteisenmetall zum Einsatz. Als Nichteisenmetallfasern sind zum Beispiel Kupferfasern möglich. Metalle mit hoher elektrischer Leitfähigkeit sind besonders bevorzugt, wobei auch die weiteren Eigenschaften mit dem Behälter kompatibel sein müssen.

Für die vorliegende Erfindung sind Kohlenstofffasern besonders bevorzugt. Sie sind leicht und ermöglichen eine schnelle Ableitzeit für die elektrostatische Ladung. Sie liefern ferner in dem Stoffgemisch eine optisch ansprechende Farbe, und das mit Kohlenstofffasern erhaltene Stoffgemisch ist homogen und lässt sich im Spritzgussverfahren gut verarbeiten. Auch ist das so erhaltene Stoffgemisch, wenn gewünscht, einfärbbar, so dass neben der bei Kohlenstofffasern üblichen Anthrazitfärbung auch Einfärbungen in zum Beispiel weiß oder blau möglich sind. Im Falle der Einfärbung wird vorzugsweise noch ein Schlichtmittel zugegeben, das die Farbechtheit der fertigen Produkte erhöht. Geeignete Schlichtmittel sind dem Fachmann geläufig. Als Schlichtmittel kommen insbesondere Substanzen aus der Gruppe der Polyacrylnitrile zum Einsatz.

Erfindungsgemäß ist das zweite elektrisch leitende Additiv ein intrinsisch leitfähiges Polymer, insbesondere ein dotiertes intrinsisch leitfähiges Polymer, wobei hierunter auch eine Mischung verschiedener intrinsisch leitfähiger Polymere zu verstehen ist.

Besonders bevorzugt sind die Polymere dotiert, wodurch die elektrischen Leitfähigkeiten des Kunststoffs um mehrere Zehnerpotenzen erhöht werden können. Das intrinsisch leitfähige Polymer ist vorzugswiese mit einem Gewichtsanteil von 8 % bis 15 % enthalten. Ein Gewichtsanteil von 9 % bis 10 % ist besonders bevorzugt. Ein solcher Gewichtsanteil an intrinsisch leitfähigem Polymer sorgt zum einen für eine gute elektrostatische Ableitung der Ladung sowohl aus dem Behälter wie auch aus den enthaltenen stabförmigen Artikeln, stellt auf der anderen Seite sicher, dass die mechanischen Eigenschaften des Behälters nicht beeinträchtigt werden. Schließlich ist ein solcher bevorzugter Anteil auch unter finanziellen Gesichtspunkten akzeptabel.

Intrinsisch leitfähige Polymere, auch leitfähige Polymere genannt, sind Kunststoffe (organische Polymere) mit elektrischer Leitfähigkeit, die der von Metallen entspricht oder sie einen Halbleiter sein lässt.

Als intrinsisch leitfähige Polymere können insbesondere eingesetzt werden: Polyaniline (PANI), Polythiophene (PT), Polypyrrole (PPY), Polyacetylene (PAC; und zwar cis-Polyactetylene(cis-PA) und trans-Polyacetylene (trans-PA)), Poly(3,4-ethylendioxythio-phene) (PEDOT), Poly(1,4-phenylen) (PPP), Poly(*p*-phenylenvinylene) (PPV) und seine an 2- und/oder 5-Position im aromatischen Ring substituierten Derivate sowie Polythiophene. Polyaniline sind ganz besonders geeignet sind. Werden die Polyaniline mit organischen Säuren, die große und sperrige Anionen wie Camphersulfonsäure oder para-Dodecylphenylsulfonsäure aufweisen, protoniert, können die Polyaniline in organischen Lösemitteln wie meta-Kresol gelöst werden, was die Verarbeitung zu Polymerblends mit hoher elektrischer Leitfähigkeit besonders gut möglich macht.

Gemäß einer bevorzugten Ausgestaltung der Erfindung wird bevorzugt ein intrinsisch dissipatives Polymer eingesetzt. Intrinsisch leitfähige Polymere (intrinsic conductive polymers = ICP) weisen eine Leitfähigkeit auf, die denen von Metallen gleicht. Es kann jedoch bei bestimmten Herstellungsprozessen vorkommen, dass diese Materialien nicht ausreichend oxidationsstabil sind und während des Herstellungsprozesses ihre Leitfähigkeit verlieren. In solchen Fällen kann ein intrinsisch (lediglich) ableitendes Polymer (intrinsic discharging polymer = IDP) eingesetzt werden, dass seine wenn auch wesentlich geringere Leitfähigkeit als die der ICPs auch während des Herstellungsprozesses nicht verliert.

Das elektrisch leitende Additiv in Faserform ist vorzugsweise mit einem Gewichtsanteil von 3 % bis 11 %, insbesondere von 6 % bis 8 %, und besonders bevorzugt von ungefähr 7 % in dem Werkstoff enthalten. Bei diesen Gewichtsanteilen ist zum einen eine gute Leitfähigkeit gegeben, zum anderen sind die mechanischen Eigenschaften des Werkstoffes bzw. des elektrostatisch dissipativen Materials für den Einsatzbereich nicht oder zumindest nicht relevant beeinträchtigt. Die bevorzugten Gewichtsanteile können sich auch nach Material des anorganischen Additivs in Faserform unterscheiden. So ist im Falle von Kohlenstofffasern ein Gewichtsanteil von 6 % bis 12 %, insbesondere von 8 % bis 10 % besonders bevorzugt, während im Falle von Stahlfasern ein Gewichtsanteil von 2 % bis 5 %, insbesondere von 3 % bis 4 % besonders günstig ist.

Vorteilhafterweise weist das anorganisches Additiv in Faserform, eine Faserlänge von mehr als 0,02 Millimeter und weniger als 20 Millimeter, vorzugsweise weniger als 2 Millimeter, besonders bevorzugt weniger als 0,2 Millimeter auf. Bei dieser Faserlänge ist die Verarbeitbarkeit des Werkstoffes im Spritzguss besonders gut möglich und eine besonders homogene Verteilung der Fasern im Werkstoff bzw. im elektrostatisch dissipativen Material gegeben. Die Fasern können insbesondere geschnitten oder gemahlen sein.

Weiterhin ist es vorteilhaft, wenn dem Werkstoff bzw. dem Material ein Haftvermittler zugesetzt wird. Der Haftvermittler sorgt dafür, dass die Fasern besonders gut in der Kunststoffmatrix haften. Ein Gewichtsanteil von weniger als 0,2 % im Werkstoff bzw. im Material ist besonders geeignet.

Der erfindungsgemäße Schragen oder Behälter kann auch als Schachtschragen ausgebildet sein, d.h. ein Schragen, in dem die Produkte in mehreren voneinander durch Zwischenwände getrennten Schächten liegen. Vorteilhafterweise bestehen dabei auch die Zwischenwände aus elektrisch leitfähigem Kunststoff, insbesondere dem erfindungsgemäßen elektrostatisch dissipativen Material.

Der erfindungsgemäße Schragen oder Behälter kann auch eine, vorzugsweise entfernbare Vorderwand aus elektrisch leitfähigem Kunststoff, insbesondere dem erfindungsgemäßen elektrostatisch dissipativen Material, aufweisen. Hiermit wäre ein lediglich an der Oberseite offener Behälter gebildet.

Der erfindungsgemäße Schragen oder Behälter kann auch einen entfernbaren Deckel aus elektrisch leitfähigem Kunststoff und/oder Metall aufweisen. Hiermit wäre ein lediglich an der Vorderseite offener Behälter gebildet. Dabei kann insbesondere das erfindungsgemäße elektrostatisch dissipative Material zum Einsatz kommen.

Der erfindungsgemäße Schragen oder Behälter kann auch einen Bodenwand, aufweisen, die als linear und horizontal bewegbares Schwert aus elektrisch leitfähigem Kunststoff, insbesondere dem erfindungsgemäßen elektrostatisch dissipativen Material, und/oder Metall ausgebildet ist.

Der erfindungsgemäße Schragen oder Behälter kann auch waagerechte schlitzförmige Öffnungen in beide Seitenwände aufweisen, welche einen Durchtritt für ein horizontal bewegbares Schwert zum Entleeren der Schragen oder Behälter ermöglichen.

Der erfindungsgemäße Schragen oder Behälter kann auch senkrechte schlitzförmige Öffnungen in beide Seitenwände aufweisen, welche einen Durchtritt für Förderelemente zum Füllen und/oder Entleeren der Schragen oder Behälter ermöglichen.

Der erfindungsgemäße Schragen oder Behälter kann auch eine keilförmige, vorzugsweise entnehmbare Bodenplatte aufweisen, welche aus elektrisch leitfähigem Kunststoff, insbesondere dem erfindungsgemäßen elektrostatisch dissipativen Material, und/oder Metall ausgebildet ist.

Der erfindungsgemäße leitfähige Kunststoffschragen weist eine stark reduzierte Haftung der Artikel an dessen Innenwänden auf. Dies wirkt sich vorteilhaft auf die Füll- und die Entleervorgänge aus, jedoch könnte sich dies möglicherweise nachteilig hinsichtlich eines sicheren Transports der mit stabförmigen Artikeln gefüllten aufrecht stehenden Schragen, insbesondere bei Beschleunigungs- und/oder Verzögerungsvorgängen auswirken.

In einer Weiterbildung des erfindungsgemäßen Schragen ist deshalb vorgesehen, dass die Rückwand des Schragens auf ihrer Innenseite um wenigstens 1 Grad aus der Senkrechten gegenüber der senkrechten Außenseite geneigt ist, wobei die Wandstärke der Rückwand von oben nach unten zur Bodenwand zunimmt. Hiermit ist zudem der Vorteil bei der Herstellung des Kunststoffschragens verbunden, dass eine sogenannte Entformungsschräge geschaffen ist.

Durch die vorbeschriebenen Weiterbildungen ist nunmehr ein sicherer Transport der Artikel in aufrecht stehenden Schragen möglich, ohne dass die Fördermittel, insbesondere für den Transport von Vollschragen wie üblich in Schragenfülleinrichtungen und Schragenentleereinrichtungen geneigt ausgeführt sein müssen.

Wie vorstehend ausgeführt ist es sehr vorteilhaft, wenn die Schragen aus elektrisch leitfähigem Kunststoff bestehen, da somit eine Ableitung der durch Reibung entstehenden Ladung möglich ist. Um den gewünschten Effekt zu erzielen ist es weiterhin erforderlich, dass die Ladung aus bzw. von dem Schragen abgeleitet wird. Maschinen und Einrichtungen in der Tabak verarbeitenden Industrie weisen regelmäßig ein Maschinengrundgestell aus Stahl oder Aluminium auf, an dem die einzelnen Komponenten und Baugruppen sowie Einrichungen angebracht sind. Dieses Maschinengrundgestell ist stets geerdet, es ist somit gut geeignet, die entstandene Ladung abzuleiten. Dazu ist es erforderlich, zumindest zeitweise eine leitende Verbindung zwischen einem Schragen und dem Maschinengrundgestell herzustellen. Vorteilhaft wird diese durch mindestens ein ladungsabführendes Element, bspw. eine Metallbürste oder ein bewegbares Federblech, erreicht, das an der Zuführeinrichtung, an der Entleerstation, an der Abtransporteinrichtung und/oder an der Übergabeeinrichtung angebracht ist.

Besonders bevorzugte Ausführungsformen werden anhand der beigefügten Zeichnung näher erläutert. In der Zeichnung zeigt:
Fig. 1 eine perspektivische Darstellung eines erfindungsgemäßen als Schachtschragen ausgebildeten Schragens,
Fig. 2 eine Ausführungsform des in Fig. 1 gezeigten Schragens mit Veranschaulichung der Ausrichtung der Kohlenstofffasern parallel zur Längsrichtung der Schragenwand,
Fig. 3 eine weitere Ausführungsform des in Fig. 1 gezeigten Schragens mit Veranschaulichung der Ausrichtung der Kohlenstofffasern parallel zur Längsrichtung des Schragenbodens,
Fig. 4 eine perspektivische Ansicht eines vorderwandfreien Schragens mit aufgestecktem Deckel,
Fig. 5 eine Explosionsdarstellung von Teilen des Schragens gemäß Fig. 4,
Fig. 6 eine Explosionsdarstellung eines Schragens mit Vorderwand in perspektivischer Ansicht.

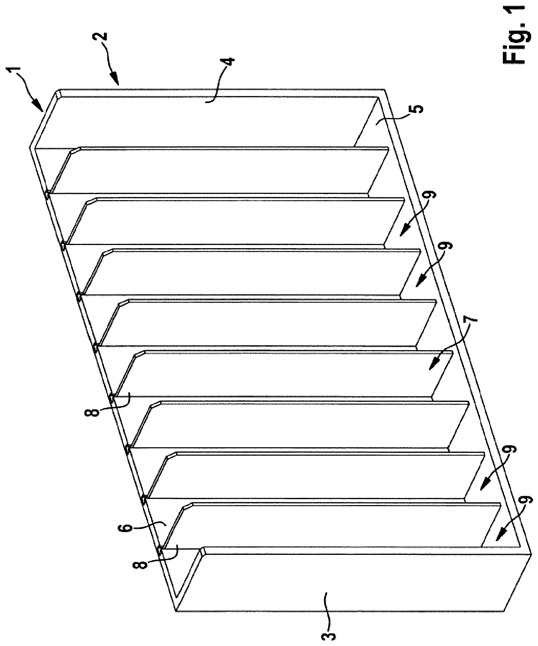

Der in den Fig. 1 bis Fig. 3 beispielhaft dargestellte Schragen kommt in der Tabak verarbeitenden Industrie, insbesondere zum Transport und zur Speicherung von stabförmigen Produkten, wie Filterzigaretten, Filterstäben, Multisegmentartikel oder EZigaretten, zum Einsatz.

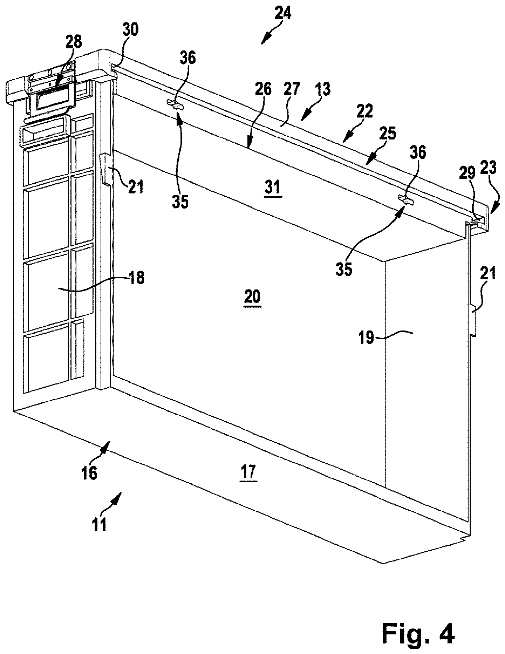

Die Fig. 1 bis Fig. 3 zeigen einen Schachtschragen 1, der zur Bildung eines Schragengrundkörpers 2 zwei Seitenwände 3 und 4, eine Bodenwand 5 und eine Rückwand 6 aufweist. Die Seitenwände 3, 4 sind im Wesentlichen parallel beabstandet angeordnet, d.h. die Seitenwände können aus den Figuren nicht ersichtlich Entformungsschrägen aufweisen. Die Seitenwände 3, 4 begrenzen einen durch den Schragenkörper 2 definierten Aufnahmeraum 7 seitlich. Die Bodenwand 5 begrenzt den Aufnahmeraum 7 nach unten. Üblicherweise sind die Schachtschragen 1 nach vorn und oben offen ausgebildet. Es können auch Vorderwände und Deckelemente vorgesehen sein, wie die Fig. 4 bis Fig. 6 zeigen. Der Schragenkörper 2 kann einteilig oder mehrteilig ausgebildet sein. Vorzugsweise sind mehrere Zwischenwände 8 als Schachtwände zur Unterteilung des Aufnahmeraums 7 in mehrere Schächte 9 mit dem Schragenkörper 2 lösbar oder fest verbunden. Die Zwischenwände 8 können auch integral mit dem Schragenkörper 2 ausgebildet sein. Die Zwischenwände 8 verlaufen parallel und beabstandet zueinander bzw. zu den Seitenwänden 3, 4. Der Schragen 1 kann auch ohne Zwischenwände 8 als Standardschragen ausgebildet sein.

Der Schragen ist aus elektrisch leitfähigem Kunststoff hergestellt. Dabei kann es sich sowohl um ein sogenanntes intrinsisch leitfähiges Polymere handeln, wie auch um einen Kunststoff, dem durch Zusatz von Additiven eine elektrische Leitfähigkeit verliehen wird.

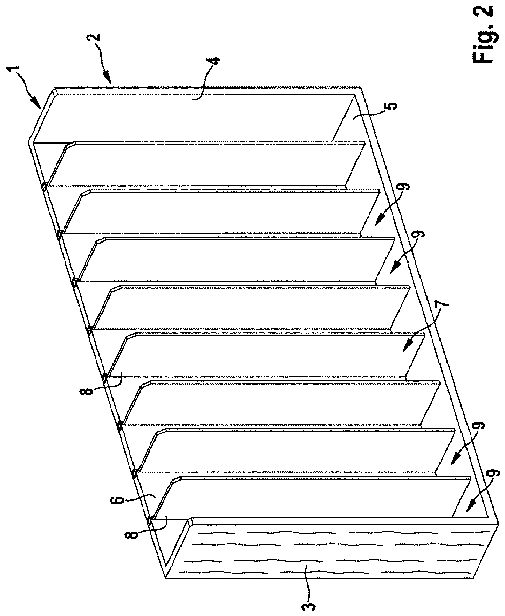

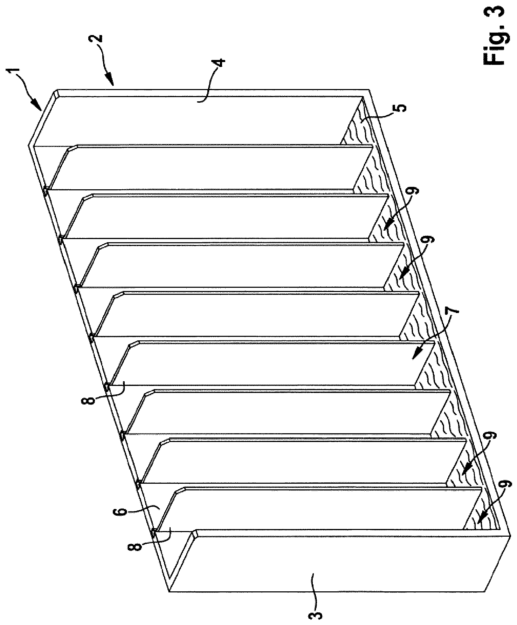

Der in den Fig. 2 und Fig. 3 gezeigte Schragen 1 ist aus einem Kunststoff unter Zusatz von Additiven hergestellt. Als Additiv sind dabei Fasern eines anorganischen Stoffes enthalten. Solche Fasern können insbesondere Edelstahlfasern oder Kohlestofffasern sein. Dabei ist die Leitfähigkeit in Faserrichtung wesentlich höher als senkrecht dazu. Bei dem in Fig. 2 gezeigten Schragen 1 sind die Fasern im Wesentlich parallel zur Längsausdehnung der Schragenseitenwände 3 und Zwischenwände 8 ausgebildet. Bei dem in Fig. 3 gezeigten Schragen verlaufen die Fasern im Wesentlichen parallel zur Längsausdehnung des Schragenbodens 5.

In der Fig. 4 ist ein einzelner Schragen 11 in einer zweiten Ausgestaltung dargestellt. Ein solcher Schragen 11 umfasst einen Schragengrundkörper 16, der aus einer Bodenwand 17, zwei Seitenwänden 18, 19 und einer Rückwand 20 gebildet ist. Dieser vorzugsweise aus Kunststoff bestehende und im Spritzgussverfahren hergestellte Schragengrundkörper 16 kann einteilig oder mehrteilig ausgebildet sein. Die nach innen weisenden Seiten sämtlicher Wände sind glatt und eben ausgebildet. Insbesondere die Seitenwände 18, 19 können nach außen hin eine Versteifungsstruktur aufweisen. An den der Rückwand 20 abgewandten Seiten der Seitenwände 18, 19, also an den zur offenen Vorderseite hin weisenden Kanten der Seitenwände 18, 19, sind seitlich gerichtete Vorsprünge 21 ausgebildet, die zum "Einhängen" von einer in der Fig. 2 nicht dargestellten Vorderwand ausgebildet und eingerichtet sind. Die Vorsprünge 21 oder auch Nasen dienen zum Positionieren und/oder Fixieren der Vorderwand 33 an dem Schragengrundkörper 16. Dem Schragen 11 ist eine Schragen-Handhabungshilfe 13 zugeordnet. Diese Schragen-Handhabungshilfe 13 ist ausgebildet und eingerichtet für einen Schragen 11 zum Transportieren und/oder Bevorraten von stabförmigen Artikeln der Tabak verarbeitenden Industrie. Die Schragen-Handhabungshilfe 13 zeichnet sich dadurch aus, dass sie einen auf einen Schragen 11 aufsteckbaren Deckel 22 umfasst, wobei der Deckel 22 einen Schmalseiten 23 und Breitseiten 24 (siehe z.B. Fig. 4) aufweisenden Rahmen 25 und ein Schragen-Schwert 26 (im Folgenden als Schwert bezeichnet) umfasst, und das Schwert 26 in dem Rahmen 25 geführt und relativ zum Rahmen linear bewegbar ist. Mit anderen Worten ist der Deckel 22 zweiteilig ausgebildet und weist eine in aufgestecktem Zustand ortsfeste Komponente, nämlich den Rahmen 25, und eine bewegbare Komponente, nämlich das Schwert 26, auf.

Zweckmäßigerweise ist der Rahmen 25 aus einem rechteckförmig umlaufenden Steg 27 gebildet, wobei an den Schmalseiten 23 des Rahmens 25 an dem Steg 27 jeweils ein Element 28 zum Positionieren und/oder Fixieren des Rahmens 25 an dem zu handhabenden Schragen 11 angeordnet ist. Dieses Element 28 kann z.B. eine Art Federbügel sein. Andere Ausführungsformen des Elementes 28, beispielsweise als Klickverschluss, Klemmhalter oder Bügelverschluss, sind ebenfalls vorsehbar. Der Rahmen 25 selbst weist mindestens an den Schmalseiten 23 nach innen gerichtete Führungsnuten 29 auf, in denen das Schwert 26 geführt ist. Die Führungsnuten 29 sind zur Vorderseite hin, also auf der der Rückwand 20 abgewandten Seite, offen ausgebildet und bilden somit eine Einführöffnung 30. Damit ist an mindesten einer Breitseite 24 eine Einführöffnung 30 zum Einführen des Schwertes 26 ausgebildet und vorgesehen. Die Führungsnuten 29 können auch durchgängig ausgebildet sein, so dass beide Breitseiten 24 eine Einführöffnung 30 aufweisen. Bei der letztgenannten Ausführungsform kann das Schwert 26 dann quasi nach vorn und nach hinten geschoben oder gezogen werden.

Das Schwert 26 selbst ist aus einer Schließplatte 31 mit seitlichen Führungen 32 gebildet, wobei die Führungen 32 einstückig mit der Schließplatte 31 ausgebildet sind. Die Führungen 32 stehen auf der Rückseite, also der Rückwand 20 des Schragens 11 zugewandten Seite, über die Schließplatte 31 hinaus, so dass das Schwert 26 selbst in vollständig geöffneter, also zurückgezogener Position noch Halt mit den Führungen 32 in den seitlichen Führungsnuten 29 des Rahmens 25 aufweist. Durch die erfindungsgemäße Ausbildung ist das Schwert 26 in der oder parallel zu der durch den Rahmen 25 aufgespannten Ebene senkrecht zu den Breitseiten 24 des Rahmens 25 bewegbar, derart, dass das Schwert 26 bei auf einen Schragen 11 gestecktem Deckel 22 senkrecht zur Rückwand 20 bewegbar ist. In der gezeigten Ausführungsform sind die Führungsnuten 29 auf der Unterseite des Rahmens 25 ausgebildet. Die Führungsnuten 29 können aber auch auf der Oberseite und sogar auf beiden Seiten des Rahmens 25 ausgebildet sein. Die Schließplatte 31 kann auch geteilt sein, so dass eine Betätigung zu beiden Seiten ermöglicht ist.

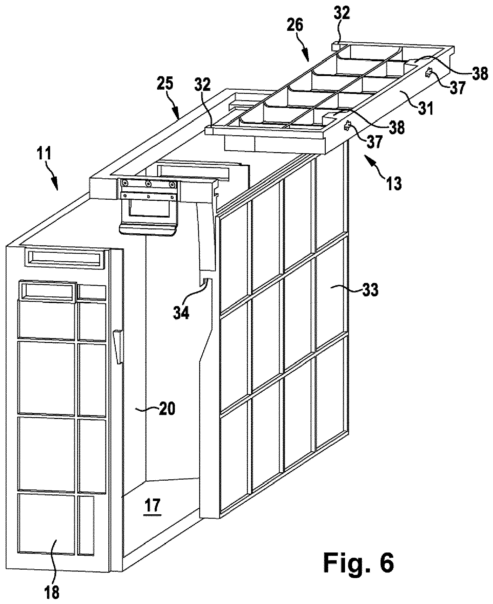

Bei einer bevorzugten Weiterbildung der Erfindung ist an dem Deckel 22 eine Vorderwand 33 (siehe Fig. 6) angeordnet, derart, dass der Schragen 11 bei auf einen Schragen 11 gestecktem Deckel einen geschlossenen Aufnahmeraum bildet. Die Vorderwand 33 und der Rahmen 25 des Deckels 22 bilden eine Einheit. Diese in Seitenansicht L-förmige Einheit ist neben den Elementen 28 zum Positionieren und/oder Fixieren des Deckels 22 am Schragen 11 über Ausnehmungen 34, die an der Vorderwand 33 ausgebildet sind und die in Wirkverbindung mit den Vorsprüngen 21 an den Seitenwänden 18, 19 bringbar sind, am Schragen 11 angeordnet, um eine zusätzliche Positionierung und/oder Fixierung zwischen Deckel 22 und Schragen 11 zu gewährleisten.

Um die Handhabung und insbesondere die Automatisierung der Schwertbetätigung zu verbessern, weist das Schwert 26 in einer besonders bevorzugten Weiterbildung einen Betätigungs- und/oder Verriegelungsmechanismus 35 auf. In der gezeigten Ausführungsform weist der Betätigungs- und/oder Verriegelungsmechanismus 35 bevorzugt zwei Ausnehmungen 36 auf. Diese Ausnehmungen 36, die eine Art Schlüsselloch darstellen, weisen neben einer Eintrittsöffnung 37 ein Verriegelungselement 38 auf (siehe z.B. Fig. 6). Der Betätigungs- und/oder Verriegelungsmechanismus 35 ist in einer in den Rahmen 25 eingeführten Position des Schwertes 26 auf der der Einführöffnung 30 des Rahmens 25 zugewandten Seite am Schwert 26 angeordnet bzw. integriert.

Der gesamte Deckel, also sowohl der Rahmen 25 mit oder ohne Vorderwand 33 als auch das Schwert 26, ist vorzugsweise aus einem elektrisch leitfähigen Kunststoff im Spritzgussverfahren hergestellt.

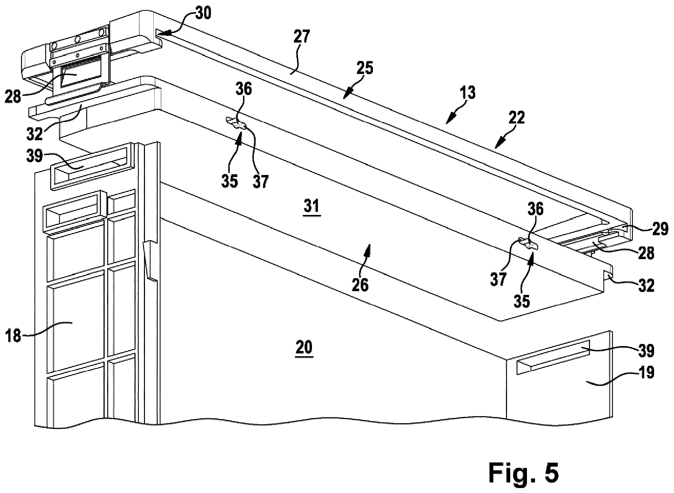

Diese zuvor beschriebene Schragen-Handhabungshilfe 13 kann einfach auf den Schragen 11 von oben aufgesteckt sein. Dabei ist die Schragen-Handhabungshilfe 13 wahlweise von außen über den oberen Randbereich des Aufnahmebehälters 16 gestülpt oder durch eine geeignete Ausbildung, beispielsweise einen umlaufenden Passrahmen und/oder Federelemente, innenseitig am Schragengrundkörper 16 fixiert. Bevorzugt ist jedoch in einer erfindungsgemäßen Ausführungsform vorgesehen, dass die Seitenwände 18, 19 an ihren der Bodenwand 17 abgewandten Enden schlitzförmige Ausnehmungen 39 aufweisen, wobei bei aufgesteckter Schragen-Handhabungshilfe 13 an dem Deckel 22 angeordnete Elemente 28 zum Positionieren und/oder Fixieren des Deckels 22 an dem Schragen 11 in die Ausnehmungen 39 der Seitenwände 18, 19 eingreifen. Die schlitzförmigen Ausnehmungen 39 können einfache Materialvertiefungen oder Durchbrüche sein (siehe z.B. Fig. 5).

### Beispiele

### Herstellung der leitfähigen Werkstoffe

Es werden leitfähige Werkstoffe unterschiedlicher Zusammensetzung hergestellt und untersucht.

Dabei kommt als Grundstoff Polystyrol der Firma The Dow Chemical Company (STYRON 485) zum Einsatz. Für die Beispiele wurde ein intrinsisch dissipatives Polymer (IDP) verwendet, wie es z. B. unter der Bezeichnung CESA - stat OCA0025661-ZT von der Firma Clariant Masterbatches (Deutschland) GmbH vertrieben wird. Die verwendeten Kohlenstofffasern weisen eine Faserlänge von 0,4 mm auf, die verwendeten Stahlfasern eine Länge von 0,7 mm.

In Tabelle 1 sind die zur Herstellung des erfindungsgemäßen leitfähigen Werkstoffs verwendeten Basismaterialien (Rohstoffe) aufgeführt.

**Tabelle 1: Zur Herstellung der erfindungsgemäßen leitfähigen Werkstoffe sowie der Vergleichsbeispiele verwendete Basismaterialien**

| Bestandteil | Gew.-% | Bemerkung |
|---|---|---|
| Polystyrol | 82 | leicht fließend mit hoher Schlagzähigkeit |
| CF | 8 | PAN-basierte Kohlefaser mit folgenden Eigenschaften: |
| | | Zugmodul: 240 - 260 Gpa; |
| | | Zugefestigkeit: 5 - 6 Gpa |
| IDP | 10 | Polyether Copolymer |

Die Anteile an elektrisch leitendem Additiv in Faserform (in den Beispielen entweder Stahl- oder Kohlenstofffasern) sowie an intrinsisch leitfähigem Polymer (IDP) der einzelnen Beispiele (B) und Vergleichsbeispiele (V) sind in der folgenden Tabelle 2 wiedergegeben, wobei sämtliche Angaben Gewichtsprozent sind:

**Tabelle 2: Zusammensetzung der Beispiele und Vergleichsbeispiele**

| Beispiel | Stahlfasern | KohlenstoffFasern | IDP |
|---|---|---|---|
| V1 | -- | -- | -- |
| V2 | -- | -- | 10 % |
| V3 | -- | 10 % | -- |
| V4 | -- | 18 % | 10 % |
| B5 | 3% | -- | 8% |
| B6 | -- | 8% | 10% |

Zur Herstellung des erfindungsgemäßen Werkstoffes werden in dem Fachmann geläufiger Weise die einzelnen Komponenten (Polystyrol, elektrisch leitendes Additiv in Faserform und intrinsisch leitfähiges Polymer sowie etwaige Zusatzstoffe) vermengt, erhitzt und durch eine Düse gedrückt. Der entstehende Strang wird hinter der Düse schrittweise abgeschlagen. Das so aus dem Werkstoff entstehende Kunststoffgranulat wird in Säcke verpackt und kann so, geschützt vor Umwelteinflüssen, gelagert und transportiert werden.

Aus diesem Kunststoffgranulat werden die Behälter mittels Spritzgussverfahren hergestellt. Hierzu gibt es eine Form, die ein Negativ zu dem zu fertigen Bauteil darstellt. Das Kunststoffgranulat wird in eine Spritzgussmaschine, die den Kunststoff erhitzt und in die Form drückt. Dann kühlt die Form ab und wird geöffnet, das fertige Bauteil fällt heraus.

Der erhaltene Werkstoff wird auf seine elektrische Leitfähigkeit geprüft, insbesondere auf seinen spezifischen Oberflächenwiderstand, welcher eine Kenngröße für ableitfähige Werkstoffe darstellt. Dabei kommen folgende Methoden zum Einsatz:
Neben dem Einsatz von Ringelektroden können zwei separate Elektroden (hier Modell 850 nach DIN EN 61340-4-1) zur Bestimmung des Oberflächenwiderstandes benutzt werden. Dies ist die Messung von Punkt-zu-Punkt-Widerständen nach DIN EN 61340-4-1. Benutz wird das Metriso 3000 - MESS-KIT der Firma Wolfgang Warmbier. Diese Messung wird im Folgenden als "Methode 1" bezeichnet.

Es hat sich herausgestellt, dass für die Vorhersage, ob ein Werkstoff für den gewünschten Einsatzzweck - Ladungsaustausch zwischen Behälter und Produkt, sowie Ladungsableitung des Behälters - die erforderliche Leitfähigkeit hat, bekannte Messverfahren nicht hinreichend brauchbare Daten liefern. Vielmehr hat die Anmelderin ein eigenes Messverfahren entwickelt.

Um die Eigenschaft eines Werkstoffes, Ladung mit den verwendeten Produkten, auszutauschen (insbesondere Filter oder Zigarettenpapier), reichen die oben genannten Messungen nicht aus. Es wurden neue Elektroden entwickelt, die die realitätsgetreuen Linien- bzw. Punktberührungen der Produkte mit dem Werkstoff nachbilden und mit diesen Kontaktbedingungen die Messung durchführen. Anhand dieser Messungen lässt sich dann eine Aussage zu der Eignung bzgl. des Anforderungsprofils eines neuen Werkstoffes treffen. Die absoluten Werte, die bei der neuen Messung herauskommen, können nur untereinander verglichen werden. Diese Messung wird im Folgenden als "Methode 2" bezeichnet.

Alle Messungen wurden bei 25°C und 30% relativer Luftfeuchtigkeit durchgeführt, es sind gerundete Mittelwerte aufgeführt. Die Angabe "nicht messbar" bedeutet, dass die Leitfähigkeit so gering war, dass sie unterhalb des Messbaren lag.

In Tabelle 3 sind die für die Beispiele und Vergleichsbeispiele nach den verschiedenen Messmethoden ermittelten Leitfähigkeiten sowie eine Beurteilung der mechanischen Eigenschaften im Hinblick auf eine Verwendung als Schragen in der tabakverarbeitenden Industrie wiedergegeben. Messmethoden 1 und 2 sind vorstehend beschrieben. Beim Praxistest werden Schragen mit Zigarettenfiltern befüllt und der Schragen anschließend wieder geleert. Ist der Schragen im Anschluss an die Leerung vollständig frei von Filtern, ist dies in der Tabelle als "Produkte haften nicht" gekennzeichnet. Verbleiben nach der Leerung hingegen noch Produkte in dem Schragen, ist dies als "Produkte haften" bezeichnet.

Die mechanische Eignung wird wie im Folgenden dargelegt klassifiziert, wobei in die Bewertung der mechanischen Eignung eine Vielzahl von Kriterien wie insbesondere Zugwiderstand, Verhalten im Dreipunkt-Biegeversuch, Oberflächenhärte, Reibverhalten gegen Filterpapier sowie gegen Polyamidband, Sprödigkeit, Verschleißfestigkeit gegen Edelstahl und Sandpapier sowie Schlagfestigkeit einfließen. Dabei wird Polystyrol ohne Zusatz von elektrisch leitfähigen Additiven als Referenz angesetzt und als für den Einsatz in der tabakverarbeitenden Industrie sehr gut geeignet bezeichnet.
+++ : hervorragend geeignet (mechanische Eignung übertrifft Polystyrol ohne Zusatz)
++ : sehr gut geeignet (mechanische Eignung entspricht Polystyrol ohne Zusatz)
+ : geeignet (mechanische Eignung liegt unterhalb von Polystyrol ohne Zusatz, ist für den geforderten Zweck aber noch ausreichend)
- : nicht geeignet (keine mechanische Eignung für den geforderten Zweck)

**Tabelle 3: Ergebnisse der Leitfähigkeitsmessungen und mechanische Eignung**

| Beispiel | Leitfähigkeit Methode 1 [Ohm] | Leitfähigkeit Methode 1 [Ohm] | Praxistest | Mechanische Eignung | Bemerkung |
|---|---|---|---|---|---|
| V1 | nicht messbar | nicht messbar | Produkte haften | ++ | |
| V2 | 1*10^9 | 1,3*10^10 | Produkte haften nicht | - | zu weich |
| V3 | 5000 | nicht messbar | Produkte haften | +++ | |
| V4 | 1000-2000 | 2000-3*10^9 | Produkte haften nicht | - | extrem spröde |
| B5 | 2*10^8 | 2,5*10^10 | Produkte haften nicht | + | erhöhtes Gewicht |
| B6 | 1200 | 2500-1*10^10 | Produkte haften nicht | ++ | |

Die Versuche zeigen Ergebnisse, die nach herkömmlicher Meinung nicht unbedingt zu erwarten waren. So war anzunehmen, dass ein Werkstoff gemäß V3 (mit 10% Kohlenstofffasern), der eine gute Leitfähigkeit aufweist, auch für Schragen gut geeignet sein sollte. Das Material hat zwar exzellente mechanische Eigenschaften und liefert in der Leitfähigkeitsmessung nach Methode 1 auch sehr gute Ergebnisse, jedoch haften die Produkte im Schragen, was durch die neue, von der Anmelderin entwickelte Leitfähigkeitsmessung nach Methode 2 bestätigt wird, bei der für den Werkstoff gemäß V3 keine Leitfähigkeit messbar war.

Der Werkstoff gemäß V2 weist zwar hervorragende Ergebnisse in Bezug auf die Leitfähigkeit auf, ist jedoch im Hinblick auf die mechanischen Eigenschaften nicht verwendbar; der Werkstoff ist zu weich und liefert keinen stabil handhabbaren Behälter.

Überraschender Weise hat sich gezeigt, dass die Kombination von anorganischem Additiv in Faserform und intrinsisch leitfähigem Polymer (B5 und B6) einen Werkstoff liefert, der sowohl eine exzellente elektrische Leitfähigkeit aufweist, die auch für den Anwendungsbereich in der tabakverarbeitenden Industrie eine ausreichende elektrostatische Ableitung gewährleistet, wie auch die Anforderungen an die mechanische Eignung erfüllt.

## Patentansprüche

1. Schragen (1, 11) zur Aufnahme stabförmiger Produkte der Tabak verarbeitenden Industrie, umfassend einen durch eine Rückwand (6, 20), zwei zumindest im Wesentlichen parallele und beabstandet zueinander angeordnete Seitenwände (3, 4, 18, 19) sowie eine Bodenwand (5, 17) gebildeten Schragengrundkörper (2) unter Bildung eines nach vorn und nach oben offen ausgebildeten Aufnahmeraumes (7) für die Produkte, wobei der Schragen (1, 11) zumindest teilweise, vorzugsweise im Wesentlichen vollständig, aus einem elektrisch leitfähigen Kunststoff gebildet ist, **dadurch gekennzeichnet, dass** der leitfähigen Kunststoff ein Stoffgemisch aus einem Grundstoff, nämlich einem Kunststoff, und mindestens zwei elektrisch leitenden Additiven ist.

2. Schragen (1, 11) nach Anspruch 1, **dadurch gekennzeichnet, dass** der Schragen (1, 11) als Schachtschragen ausgebildet ist und eine Mehrzahl von Zwischenwänden (8) aus elektrisch leitfähigem Kunststoff aufweist.

3. Schragen (1, 11) nach Anspruch 1 oder 2, **dadurch gekennzeichnet, dass** der Schragen (1, 11) eine, vorzugsweise entfernbare Vorderwand (33) aus elektrisch leitfähigem Kunststoff aufweist.

4. Schragen (1, 11) nach einem der Ansprüche 1 bis 3, **dadurch gekennzeichnet, dass** der Schragen (1, 11) einen entfernbaren Deckel (33) aus elektrisch leitfähigem Kunststoff aufweist.

5. Schragen (1, 11) nach einem der Ansprüche 1 bis 4, **dadurch gekennzeichnet, dass** der Schragen (1, 11) einen Rahmen (25) mit wenigstens einem Schlitz, zur Aufnahme eines linear bewegbaren Schwerts, aus elektrisch leitfähigem Kunststoff und/oder Metall aufweist, wobei das Schwert (26) aus elektrisch leitfähigem Kunststoff und/oder Metall besteht.

6. Schragen (1, 11) nach einem der Ansprüche 1 bis 5, **dadurch gekennzeichnet, dass** die Bodenwand als linear und horizontal bewegbares Schwert aus elektrisch leitfähigem Kunststoff und/oder Metall besteht.

7. Schragen (1, 11) nach einem der Ansprüche 1 bis 6, **dadurch gekennzeichnet, dass** ein erstes elektrisch leitendes Additiv ein anorganisches Additiv in Faserform, insbesondere ausgewählt aus mindestens einer Substanz der Gruppe, bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer ist.

8. Schragen (1, 11) nach einem der Ansprüche 1 bis 7, **dadurch gekennzeichnet, dass** der Grundstoff Polystyrol ist.

9. Schragen (1, 11) nach Anspruch 7 oder 8, **dadurch gekennzeichnet, dass** das intrinsisch leitfähige Polymer oder das intrinsisch dissipative Polymer einen Gewichtsanteil von mindestens 3 % und weniger als 25 % hat, insbesondere von 3 % bis 11 %, vorzugsweise von 6 % bis 8 %, und besonders bevorzugt von ungefähr 7 % aufweist.

10. Schragen (1, 11) nach einem der Ansprüche 7 bis 9, **dadurch gekennzeichnet, dass** das intrinsisch leitfähige Polymer ausgewählt ist aus mindestens einer Substanz der Gruppe bestehend aus Polyanilinen, Polyurethanen, Polyethylendioxythiophenen und Polyacrylaten.

11. Schragen (1, 11) nach einem der Ansprüche 7 bis 10, **dadurch gekennzeichnet, dass** das intrinsisch dissipative Polymer ausgewählt ist aus mindestens einer Substanz der Gruppe der Polyethylen Copolymere.

12. Schragen (1, 11) nach einem der Ansprüche 7 bis 11, **dadurch gekennzeichnet, dass** die wenigstens zwei elektrisch leitenden Additiven einen Gewichtsanteil in Summe von mehr als 8 % und weniger als 40 % haben, insbesondere von mindestens 11 % und höchstens 25 %, wobei das intrinsisch leitfähige Polymer oder das intrinsisch dissipative Polymer einen größeren Gewichtsanteil aufweist als das anorganische Additiv in Faserform.

13. Schragen (1, 11) nach einem der Ansprüche 7 bis 12, **dadurch gekennzeichnet, dass** das anorganische Additiv in Faserform einen Gewichtsanteil von 3 % bis 11 %, insbesondere von 6 % bis 8 %, besonders bevorzugt von ungefähr 7 % aufweist.

14. Schragen (1, 11) nach einem der Ansprüche 7 bis 13, **dadurch gekennzeichnet, dass** das anorganisches Additiv in Faserform, eine Faserlänge von mehr als 0,020 Millimeter und weniger als 20 Millimeter, vorzugsweise weniger als 2 Millimeter, besonders bevorzugt weniger als 0,2 Millimeter aufweist.

15. Elektrostatisch dissipatives Material, insbesondere zur Herstellung eines Schragen (1, 11) nach einem der Ansprüche 1 bis 14, bestehend aus einem Grundstoff, nämlich einem Kunststoff, und mindestens zwei, insbesondere genau zwei, elektrisch leitenden Additiven, **dadurch gekennzeichnet, dass** ein erstes elektrisch leitendes Additiv ein anorganisches Additiv in Faserform, insbesondere ausgewählt aus mindestens einer Substanz der Gruppe bestehend aus Kohlenstoff, Edelstahl und Nichteisenmetall, wobei Kohlenstofffasern besonders bevorzugt sind, und ein zweites elektrisch leitendes Additiv ein intrinsisch leitfähiges, insbesondere ein dotiertes intrinsisch leitfähiges Polymer oder ein intrinsisch dissipatives Polymer ist.

16. Elektrostatisch dissipatives Material nach Anspruch 15, **dadurch gekennzeichnet, dass** der Grundstoff Polystyrol ist.

17. Elektrostatisch dissipatives Material nach Anspruch 15 oder 16, **dadurch gekennzeichnet, dass** als zweites elektrisch leitendes Additiv ein intrinsisch dissipatives Polymer aus der Gruppe der Polyether Copolymere eingesetzt wird.

18. Elektrostatisch dissipatives Material nach einem der Ansprüche 15 bis 17, **dadurch gekennzeichnet, dass** das intrinsisch leitfähige Polymer oder das intrinsisch dissipative Polymer einen Gewichtsanteil von 8 % bis 15 %, insbesondere von 9 % bis 10 % hat.

19. Elektrostatisch dissipatives Material nach einem der Ansprüche 15 bis 18, **dadurch gekennzeichnet, dass** als elektrisch leitendes Additiv in Faserform eine polyacrylnitril(PAN)-basierte Kohlefaser eingesetzt wird.

20. Elektrostatisch dissipatives Material nach einem der Ansprüche 15 bis 19, **dadurch gekennzeichnet, dass** das elektrisch leitende Additiv in Faserform einen Gewichtsanteil von 3 % bis 11 %, insbesondere von 6 % bis 8 %, und besonders bevorzugt von ungefähr 7 % aufweist.

21. Elektrostatisch dissipatives Material nach einem der Ansprüche 15 bis 20, **dadurch gekennzeichnet, dass** das anorganisches Additiv in Faserform, eine Faserlänge von mehr als 0,02 Millimeter und weniger als 20 Millimeter, vorzugsweise weniger als 2 Millimeter, besonders bevorzugt weniger als 0,2 Millimeter aufweist.

## Claims

1. Tray (1, 11) for receiving rod-shaped products of the tobacco-processing industry, comprising a tray main body (2) formed by a rear wall (6, 20), two at least substantially parallel side walls (3, 4, 18, 19) arranged at a distance from one another, and a bottom wall (5, 17), forming a receiving space (7) for the products which is open at the front and at the top, the tray (1, 11) being at least partially, preferably substantially completely, formed from an electrically conductive plastic, **characterised in that** the conductive plastic is a mixture of a base material, namely a plastic, and at least two electrically conductive additives.

2. Tray (1, 11) according to claim 1, **characterised in that** the tray (1, 11) is configured as a shaft tray and has a plurality of intermediate walls (8) made of electrically conductive plastic.

3. Tray (1, 11) according to claim 1 or 2, **characterised in that** the tray (1, 11) comprises a, preferably removable, front wall (33) made of electrically conductive plastic.

4. Tray (1, 11) according to any one of claims 1 to 3, **characterised in that** the tray (1, 11) comprises a removable cover (33) made of electrically conductive plastic.

5. Tray (1, 11) according to any one of claims 1 to 4, **characterised in that** the tray (1, 11) has a frame (25) made of electrically conductive plastic and/or metal, with at least one slot for receiving a linearly movable swivel blade, said swivel blade (26) being made of electrically conductive plastic and/or metal.

6. Tray (1, 11) according to any one of claims 1 to 5, **characterised in that** the bottom wall is made of electrically conductive plastic and/or metal as a linearly and horizontally movable swivel blade.

7. Tray (1, 11) according to any one of claims 1 to 6, **characterised in that** a first electrically conductive additive is an inorganic additive in fibrous form, in particular selected from at least one substance of the group consisting of carbon, stainless steel and non-ferrous metal, carbon fibres being particularly preferred, and a second electrically conductive additive is an intrinsically conductive polymer, in particular a doped intrinsically conductive polymer or an intrinsically dissipative polymer.

8. Tray (1, 11) according to any one of claims 1 to 7, **characterised in that** the base material is polystyrene.

9. Tray (1, 11) according to claim 7 or 8, **characterised in that** the intrinsically conductive polymer or the intrinsically dissipative polymer has a weight fraction of at least 3% and less than 25%, in particular in the range from 3% to 11%, preferably from 6% to 8%, and particularly preferably of about 7%.

10. Tray (1, 11) according to any one of claims 7 to 9, **characterised in that** the intrinsically conductive polymer is selected from at least one substance of the group consisting of polyanilines, polyurethanes, polyethylene dioxythiophenes and polyacrylates.

11. Tray (1, 11) according to any one of claims 7 to 10, **characterised in that** the intrinsically dissipative polymer is selected from at least one substance of the group of polyethylene copolymers.

12. Tray (1, 11) according to any one of claims 7 to 11, **characterised in that** the at least two electrically conductive additives have a total weight fraction of more than 8% and less than 40%, in particular of at least 11% and at most 25%, the intrinsically conductive polymer or the intrinsically dissipative polymer having a larger weight fraction than the inorganic additive in fibrous form.

13. Tray (1, 11) according to any one of claims 7 to 12, **characterised in that** the inorganic additive in fibrous form has a weight fraction in the range from 3% to 11%, in particular from 6% to 8%, particularly preferably of about 7%.

14. Tray (1, 11) according to any one of claims 7 to 13, **characterised in that** the inorganic additive in fibrous form has a fibre length of more than 0.020 millimetres and less than 20 millimetres, preferably less than 2 millimetres, particularly preferably less than 0.2 millimetres.

15. Electrostatic-dissipative material, in particular for producing a tray (1, 11) according to any one of claims 1 to 14, consisting of a base material, namely a plastic, and at least two, in particular exactly two, electrically conductive additives, **characterised in that** a first electrically conductive additive is an inorganic additive in fibrous form, in particular selected from at least one substance of the group consisting of carbon, stainless steel and non-ferrous metal, carbon fibres being particularly preferred, and a second electrically conductive additive is an intrinsically conductive, in particular a doped intrinsically conductive polymer or an intrinsically dissipative polymer.

16. Electrostatic-dissipative material according to claim 15, **characterised in that** the base material is polystyrene.

17. Electrostatic-dissipative material according to claim 15 or 16, **characterised in that** an intrinsically dissipative polymer from the group of polyether copolymers is used as the second electrically conductive additive.

18. Electrostatic-dissipative material according to any one of claims 15 to 17, **characterised in that** the intrinsically conductive polymer or the intrinsically dissipative polymer has a weight fraction in the range from 8% to 15%, in particular from 9% to 10%.

19. Electrostatic-dissipative material according to any one of claims 15 to 18, **characterised in that** a polyacrylonitrile (PAN)-based carbon fibre is used as the electrically conductive additive in fibrous form.

20. Electrostatic-dissipative material according to one any of claims 15 to 19, **characterised in that** the electrically conductive additive in fibrous form has a weight fraction in the range from 3% to 11%, in particular from 6% to 8%, and particularly preferably of about 7%.

21. Electrostatic-dissipative material according to any one of claims 15 to 20, **characterised in that** the inorganic additive in fibrous form has a fibre length of more than 0.02 millimetres and less than 20 millimetres, preferably less than 2 millimetres, particularly preferably less than 0.2 millimetres.

## Revendications

1. Bateau (1, 11) pour recevoir des produits en forme de tige de l'industrie de transformation du tabac, comprenant un corps de base de bateau (2) formé par une paroi arrière (6, 20), deux parois latérales (3, 4, 18, 19) au moins essentiellement parallèles et agencées à distance l'une de l'autre, ainsi qu'une paroi de fond (5, 17), en formant un espace de réception (7) pour les produits, configuré pour être ouvert vers l'avant et vers le haut, le bateau (1, 11) étant formé au moins en partie, de préférence essentiellement en totalité, d'une matière plastique électriquement conductrice, **caractérisé en ce que** la matière plastique conductrice est un mélange de matières composé d'une matière de base, à savoir une matière plastique, et d'au moins deux additifs électriquement conducteurs.

2. Bateau (1, 11) selon la revendication 1, **caractérisé en ce que** le bateau (1, 11) est configuré sous forme de bateau à goulottes et présente une pluralité de cloisons (8) en matière plastique électriquement conductrice.

3. Bateau (1, 11) selon la revendication 1 ou 2, **caractérisé en ce que** le bateau (1, 11) présente une paroi antérieure (33), de préférence amovible, en matière plastique électriquement conductrice.

4. Bateau (1, 11) selon l'une quelconque des revendications 1 à 3, **caractérisé en ce que** le bateau (1, 11) présente un couvercle amovible (33) en matière plastique électriquement conductrice.

5. Bateau (1, 11) selon l'une quelconque des revendications 1 à 4, **caractérisé en ce que** le bateau (1, 11) présente un cadre (25) avec au moins une fente, pour recevoir une tirette pouvant être déplacée linéairement, en matière plastique électriquement conductrice et/ou en métal, la tirette (26) étant constituée de matière plastique électriquement conductrice et/ou de métal.

6. Bateau (1, 11) selon l'une quelconque des revendications 1 à 5, **caractérisé en ce que** la paroi de fond, en tant que tirette pouvant être déplacée linéairement et horizontalement, est constituée de matière plastique électriquement conductrice et/ou de métal.

7. Bateau (1, 11) selon l'une quelconque des revendications 1 à 6, **caractérisé en ce qu'**un premier additif électriquement conducteur est un additif inorganique sous forme fibreuse, notamment choisi parmi au moins une substance du groupe constitué par le carbone, l'acier inoxydable et un métal non ferreux, les fibres de carbone étant particulièrement préférées, et un deuxième additif électriquement conducteur est un polymère intrinsèquement conducteur, notamment un polymère intrinsèquement conducteur dopé ou un polymère intrinsèquement dissipatif.

8. Bateau (1, 11) selon l'une quelconque des revendications 1 à 7, **caractérisé en ce que** la matière de base est le polystyrène.

9. Bateau (1, 11) selon la revendication 7 ou 8, **caractérisé en ce que** le polymère intrinsèquement conducteur ou le polymère intrinsèquement dissipatif a une proportion en poids d'au moins 3 % et de moins de 25 %, notamment de 3 % à 11 %, de préférence de 6 % à 8 %, et de manière particulièrement préférée d'environ 7 %.

10. Bateau (1, 11) selon l'une quelconque des revendications 7 à 9, **caractérisé en ce que** le polymère intrinsèquement conducteur est choisi parmi au moins une substance du groupe constitué par les polyanilines, les polyuréthanes, les polyéthylènedioxythiophènes et les polyacrylates.

11. Bateau (1, 11) selon l'une quelconque des revendications 7 à 10, **caractérisé en ce que** le polymère intrinsèquement dissipatif est choisi parmi au moins une substance du groupe des copolymères de polyéthylène.

12. Bateau (1, 11) selon l'une quelconque des revendications 7 à 11, **caractérisé en ce que** les au moins deux additifs électriquement conducteurs ont une proportion en poids cumulée de plus de 8 % et de moins de 40 %, notamment d'au moins 11 % et d'au plus 25 %, le polymère intrinsèquement conducteur ou le polymère intrinsèquement dissipatif ayant une proportion en poids supérieure à celle de l'additif inorganique sous forme fibreuse.

13. Bateau (1, 11) selon l'une quelconque des revendications 7 à 12, **caractérisé en ce que** l'additif inorganique sous forme fibreuse présente une proportion en poids de 3 % à 11 %, notamment de 6 % à 8 %, de manière particulièrement préférée d'environ 7 %.

14. Bateau (1, 11) selon l'une quelconque des revendications 7 à 13, **caractérisé en ce que** l'additif inorganique sous forme fibreuse présente une longueur de fibres de plus de 0,020 millimètre et de moins de 20 millimètres, de préférence de moins de 2 millimètres, de manière particulièrement préférée de moins de 0,2 millimètre.

15. Matériau électrostatiquement dissipatif, notamment pour la fabrication d'un bateau (1, 11) selon l'une quelconque des revendications 1 à 14, constitué d'une matière de base, à savoir une matière plastique, et d'au moins deux, notamment exactement deux, additifs électriquement conducteurs, **caractérisé en ce qu'**un premier additif électriquement conducteur est un additif inorganique sous forme fibreuse, notamment choisi parmi au moins une substance du groupe constitué par le carbone, l'acier inoxydable et un métal non ferreux, les fibres de carbone étant particulièrement préférées, et un deuxième additif électriquement conducteur est un polymère intrinsèquement conducteur, notamment un polymère intrinsèquement conducteur dopé ou un polymère intrinsèquement dissipatif.

16. Matériau électrostatiquement dissipatif selon la revendication 15, **caractérisé en ce que** la matière de base est le polystyrène.

17. Matériau électrostatiquement dissipatif selon la revendication 15 ou 16, **caractérisé en ce qu'**un polymère intrinsèquement dissipatif du groupe des copolymères de polyéther est utilisé en tant que deuxième additif électriquement conducteur.

18. Matériau électrostatiquement dissipatif selon l'une quelconque des revendications 15 à 17, **caractérisé en ce que** le polymère intrinsèquement conducteur ou le polymère intrinsèquement dissipatif a une proportion en poids de 8 % à 15 %, notamment de 9 % à 10 %.

19. Matériau électrostatiquement dissipatif selon l'une quelconque des revendications 15 à 18, **caractérisé en ce qu'**une fibre de carbone à base de polyacrylonitrile (PAN) est utilisée en tant qu'additif électriquement conducteur sous forme fibreuse.

20. Matériau électrostatiquement dissipatif selon l'une quelconque des revendications 15 à 19, **caractérisé en ce que** l'additif électriquement conducteur sous forme fibreuse présente une proportion en poids de 3 % à 11 %, notamment de 6 % à 8 %, et de manière particulièrement préférée d'environ 7 %.

21. Matériau électrostatiquement dissipatif selon l'une quelconque des revendications 15 à 20, **caractérisé en ce que** l'additif inorganique sous forme fibreuse présente une longueur de fibres de plus de 0,02 millimètre et de moins de 20 millimètres, de préférence de moins de 2 millimètres, de manière particulièrement préférée de moins de 0,2 millimètre.
